# EUROPÄISCHE PATENTSCHRIFT

(11) **EP 0 979 571 B1**
(45) Veröffentlichungstag und Bekanntmachung des Hinweises auf die Patenterteilung: **16.10.2002**
(21) Anmeldenummer: 98925510.4
(22) Anmeldetag: 30.04.1998
(51) Int. Cl.: H04M 1/66, H04M 1/72

(54) **MOBILFUNKGERÄT MIT VERRINGERTEM TASTENSATZ**
MOBILE RADIO TELEPHONE WITH REDUCED KEY SET
APPAREIL DE RADIOTELEPHONIE MOBILE A CLAVIER REDUIT

(30) Priorität: 02.05.1997 DE 19718711
(43) Veröffentlichungstag der Anmeldung: 16.02.2000
(73) Patentinhaber: Easyphone GmbH, 82008 Unterhaching (DE)
(72) Erfinder: PAZDERSKY, Kristian, D-82024 Taufkirchen (DE); HARISCH, Klaus, D-89281 Altenstadt (DE); WÜNSCH, Peter, D-82131 Gauting (DE)
(74) Vertreter: Rupp, Christian, Dipl.Phys.
(86) Internationale Anmeldenummer: EP9802566
(87) Internationale Veröffentlichungsnummer: WO98051059

(56) Entgegenhaltungen:
- EP-A- 0 524 652
- EP-A- 0 554 625
- GB-A- 2 305 577
- US-A- 4 969 180
- PATENT ABSTRACTS OF JAPAN vol. 017, no. 287 (E-1374), 2. Juni 1993 & JP 05 014461 A (TOSHIBA CORP), 22. Januar 1993

## Beschreibung

Die vorliegende Erfindung bezieht sich auf ein Verfahren und ein System zur Mobilfunkübertragung mittels eines Mobilteils.

Bei Mobilfunkgeräten (Mobiltelefonen) ist die Größe und das Gewicht des Mobiltelefons ein entscheidender Faktor für den Verwender. Dies heißt, je kleiner und leichter ein Gerät ist, desto bequemer kann es jederzeit verfügbar von dem Verwender mit sich geführt werden. Indessen sind die herkömmlichen Mobiltelefone im Zuge ihrer Verkleinerung an eine Grenze gestoßen, die kaum mehr überwindbar scheint. Die Länge eines Mobiltelefons wird im Betriebszustand durch den Abstand zwischen einem Ohr und dem Mund des Verwenders definiert. Die Länge des Mobiltelefons läßt sich somit im nicht-gesprächsbereiten Zustand beispielsweise durch ein Zusammenklappen des Mobiltelefons weiter verringern.

Es hat sich somit herausgestellt, daß ein entscheidender Faktor insbesondere für die Breitenabmessung eines Mobiltelefons das Tastenfeld ist. Üblicherweise weist ein Mobiltelefon neben den zehn unmittelbar notwendigen Wahltasten einige weitere Tasten für Zusatzfunktionen auf, so daß in der Regel etwa 20 Tasten auf einem Tastenfeld auf der Oberseite eines Mobiltelefons angeordnet sind. Technisch ist es zwar möglich, die Tasten des Tastenfelds zur Verringerung der Größe des Mobiltelefons insgesamt noch weiter zu verkleinern, indessen sind der Verkleinerung natürliche Grenzen dadurch gesetzt, daß eine Taste sicher und eindeutig durch einen Finger einer Hand eines Erwachsenen betätigbar sein muß. Dies bedeutet, daß der Abstand zweier Tasten zumindest so sein muß, daß bei Betätigung einer Taste keinesfalls eine benachbarte Taste ungewünscht mitbetätigt wird. Selbst wenn zur Verringerung des Tastenfelds die meisten Zusatzfunktions-Tasten weggelassen werden, so verbleiben doch wenigstens neben einem Ein-/Aus-Schalter die zehn für die Zusammensetzung einer gewählten Nummer erforderlichen Tasten. Es besteht also ein Problem dahingehend, daß insbesondere die Verkleinerung herkömmlicher Mobiltelefone in ihrer Breitenrichtung an eine Grenze gestoßen ist.

Aus der EP-A-0 554 625 ist ein Mobilfunksystem bekannt, bei dem eine Zuordnung von Verbindungszielen in der Basisstation des Systems erfolgt, in der diese Verbindungsziel-Zuweisungen abgespeichert sind.

Aus GB-A-2 305 577 ist ein Verfahren bekannt, bei dem ein Mobilteil zuerst mit einer Feststation verbunden wird und dann Zielwahltasten Verbindungsziele zugewiesen bekommen.

Aus der EP-A-0 524 652 ist es bekannt, ein Mobilfunkgerät körperlich mit einer Programmiervorrichtung zu verbinden, um auf der Programmiervorrichtung programmierte Tastenbelegungen über eine Schnittstelle auf Direktwahltasten des Mobilfunkteils zu übertragen.

Aus der US-A-4 969 180 ist ein Stift bekannt, in den ein Mobilfunkgerät integriert ist. Eine Kommunikation ist dabei nur mit einer vorbestimmten Basisstation möglich.

Aus Patent Abstracts of Japan, Vol. 017, Nr. 287 (E-1374), 2 Juni 1993 und JP-A-05 014461 ist ein drahtloses Telefonsystem bekannt.

Die vorliegende Erfindung hat daher zur Aufgabe, ein Mobilfunk-Übertragungssystem so auszugestalten, daß eine besonders kompakte Ausgestaltung des beteiligten Mobilgeräts (Mobiltelefons) ermöglicht wird.

Diese Aufgabe wird durch die Merkmale der unabhängigen Ansprüche gelöst.

Die Erfindung geht dabei von der Überlegung aus, daß der Tastensatz stark verringert werden kann und die dennoch vollständige Funktionsfähigkeit des Geräts gewährleistet sind, wenn der Zugriff auf gewisse Funktionen des Mobilteils beispielsweise in einen intelligenten Vermittlungsdienst ausgelagert werden.

Gemäß der Erfindung ist also ein Verfahren zur Konfigurierung eines Mobilteils vorgesehen, wobei das Mobilteil eine oder mehrere Wahltasten aufweist. Allen Wahltasten wird jeweils ein Verbindungsziel zugewiesen. Durch Betätigung einer Wahltaste ist somit ausschließlich eine Verbindung zu dem zugewiesenen Verbindungsziel möglich. Die Zuweisung an eine Zentraltaste erfolgt dabei so, daß sie der Benutzer des Mobilteils unmittelbar durch Zugriff auf das Mobilteils nicht ändern kann.

Dies bedeutet, daß gemäß der Erfindung das Mobilteil keine Tasten aufweist, die im herkömmlichen Sinne nur zur Eingabe einer Ziffer dienen, sondern daß vielmehr das Mobilteil nur Verbindungsaufbau-Tasten aufweist, die einen Verbindungsaufbau zu einem vorprogrammierten Verbindungsziel durch einmalige Betätigung ermöglichen (Direktwahltasten). Durch Betätigung einer Zentraltaste des Mobilteils wird dabei beispielsweise eine Verbindung von dem Mobilteil zu einer zentralen Vermittlungseinrichtung aufgebaut.

In der zentralen Vermittlungseinrichtung kann eine Paßwort-Tabelle eingespeichert werden, die Teilnehmerdaten mit jeweils zugeordnetem Paßwort enthält. Nach Aufbau der Verbindung von dem Mobilteil zu der zentralen Vermittlungseinrichtung werden dann Teilnehmerdaten und ein Paßwort von dem Mobilteil zu der zentralen Vermittlungseinrichtung übermittelt. Die zentrale Vermittlungseinrichtung gleicht dann die übermittelten Teilnehmerdaten bzw. das übermittelte Paßwort mit den in der Paßwort-Tabelle gespeicherten Daten ab. Für den Fall, daß dieser Abgleich eine Übereinstimmung der übermittelten Teilnehmerdaten und des übermittelten Paßworts mit den entsprechenden Daten der Paßwort-Tabelle ergibt, verbindet dann die zentrale Vermittlungseinrichtung den Bediener des Mobilteils wie gewünscht weiter. Da es gemäß der Erfindung nicht notwendig ist, zur Inbetriebnahme des Mobilteils einen Code einzutippen, wird die Sicherheit für den Benutzer beispielsweise für den Fall eines Diebstahls oder sonstigen Verlusts des Mobilteil durch das zu der zentralen Vermittlungseinrichtung zu übermittelnde Paßwort gesichert.

Die Zuordnung eines Verbindungsziels zu jeweils einer der Verbindungsaufbau-Tasten mit Ausnahme der Zentraltaste kann dabei durch eine Datenübermittlung von der zentralen Vermittlungsstelle zu dem Mobilteil erfolgen. Dabei ist zu bedenken, daß aufgrund des verringerten Tastensatzes, d. h. aufgrund der Tatsache, daß nur die genannten Direktwahltascen auf dem Mobilteil vorgesehen sind, eine Programmierung (Zuordnung) eines Verbindungszieles zu einer der Verbindungsaufbau-Tasten durch den Benutzer selbst an dem Mobilteil nicht erfolgen kann.

Alternativ oder zusätzlich kann die Zuordnung eines Verbindungsziels zu jeweils einer der Verbindungsaufbau-Tasten mit Ausnahme der Zentraltaste das Mobilteil in eine Feststation eingesetzt werden, wobei die Zuordnung dann durch eine Datenübertragung von der Fest-Station zu der Mobilstation erfolgt.

Die Feststation kann gleichzeitig als Ladestation dienen. Dies heißt, wenn das Mobilteil in die Feststation eingesetzt ist, kann gleichzeitig ein Akku des Mobilteils aufgeladen werden.

In der Paßwort-Tabelle der zentralen Vermittlungseinrichtung kann eine Liste an bevorzugten Verbindungszielen jeweils einem Paßwort und/oder Jeweils bestimmten Teilnehmerdaten zugeordnet werden. Somit wird die Funktion eines persönlichen Telefonbuchs ermöglicht.

Eine besonders einfache Bedienung ergibt sich, wenn das Mobilteil durch die Betätigung der Zentraltaste zuerst eingeschaltet wird, durch eine weitere Betätigung der Zentraltaste dann die Verbindung zu der zentralen Vermittlungseinrichtung aufgebaut wird, durch eine nochmals weitere Betätigung der Zentraltaste die Verbindung zu der zentralen Vermittlungseinrichtung abgebrochen wird und durch eine nochmals weitere Betätigung der Zentraltaste dann das Mobilteil wieder ausgeschaltet wird.

Vorzugsweise weist das Mobilteil eine Tastensperre derart aufweisen, daß ein unbeabsichtigtes Einschalten des Mobilteils verhindert wird. Die Tastensperre kann beispielsweise durch eine Kombination mehrerer Tasten oder durch ein Drücken einer Taszte über einen vorbestimmten Zeitraum hinweg überwunden werden.

Einer der Verbindungsaufbau-Tasten kann ein Notruf-Verbindungsziel zugeordnet werden. Durch einmaligen Druck auf diese Notruftaste kann somit in einfacher Weise eine Verbindung zu einer Notruforganisation hergestellt werden, was insbesondere für Leute von Vorteil ist, denen die Zusammensetzung einer vollständigen Nummer mittels herkömmlicher Wahltasten aus körperlichen und/oder geistigen Gründen nicht möglich ist.

Gemäß einem weiteren Aspekt der Erfindung ist ein Mobilfunk-Übertragungssystem mit wenigstens einem Mobilteil und einer zentralen Vermittlungsstelle vorgesehen. Das Mobilteil weist dabei zum Verbindungsaufbau lediglich eine oder mehrere Tasten auf, durch deren einmalige Betätigung im Sinne einer Direktwahl eine Verbindung zu einem der jeweiligen Taste zugeordneten Verbindungsziel aufbaubar ist. Dabei ist eine Zentraltaste vorgesehen, der eine zentrale Vermittlungseinrichtung ais Verbindungsziel fest vorprogrammiert zugeordnet ist. Fest vorprogrammiert soll in diesem Sinne bedeuten, daß es zumindest dem Benutzer des Mobilteils nicht möglich ist, der Zentraltaste ein anderes Verbindungsziel als die zentrale Vermittlungseinrichtung zuzuordnen.

Die zentrale Vermittlungseinrichtung kann eine Paßwort-Tabelle aufweisen, die Teilnehmerdaten mit jeweils zugeordnetem Paßwort enthält. Es kann eine Einrichtung vorgesehen sein, durch die nach Aufbau der Verbindung von dem Mobilteil zu der zentralen Vermittlungseinrichtung Teilnehmerdaten und ein Paßwort zu der zentralen Vermittlungseinrichtung übermittelbar sind. In der zentralen Vermittlungseinrichtung ist dann eine Einrichtung zum Abgleich der übermittelten Teilnehmerdaten bzw. des übermittelten Paßwort mit der Paßwort-Tabelle vorgesehen.

Für den Fall, daß die Weitervermittlung durch die zentrale Vermittlungseinrichtung nicht zustande kommt, beispielsweise, da der gewünschte Teilnehmer gerade besetzt ist,kann in dem Mobilteil beispielsweise mittels der Zentraltaste eine Wiederwahl-Funktion vorgesehen sein, so daß allein durch erneute Betätigung der Zentraltaste ohne Mitwirkung eine erneuter Anwähl-Versuch ausgeführt werden kann.

In der zentralen Vermittlungseinrichtung kann weiterhin eine Einrichtung zur Zuordnung eines Verbindungsziels zu jeweils einer der Verbindungsaufbau-Tasten mit Ausnahme der Zentraltaste vorgesehen sein, wobei die Zuordnung durch eine Datenübermittlung von der zentralen Vermittlungsstelle zu dem Mobilteil erfolgt.

In dem Mobilfunk-Übertragungssystem kann eine Feststation vorgesehen sein, in die das Mobilteil einsetzbar ist, um eine Zuordnung (Programmierung) jeweils eines Verbindungszieles zu einer der Verbindungsaufbau-Tasten mit Ausnahme der Zentraltaste durch eine Datenübertragung von der Feststation zu dem Mobilteil ausführen.

Die Feststation kann gleichzeitig eine Ladestation sein, die im eingesetzten Zustand des Mobilteils einen Akku des Mobilteils auflädt. Die Feststation kann alle Funktionen eines herkömmlichen Telefons und insbesondere eine Freisprecheinrichtung aufweisen.

In der Paßwort-Tabelle der zentralen Vermittlungseinrichtung kann eine Liste an bevorzugten Verbindungszielen vorgesehen sein, die einem Paßwort und/oder bestimmten Teilnehmerdaten zugeordnet ist.

Die Erfindung wird nun anhand von Ausführungsbeispielen und bezugnehmend auf die begleitenden Zeichnungen näher erläutert. Es zeigen:
Fig. 1 ein erstes Ausführungsbeispiel eines Mobilteils, wie es bei der vorliegenden Erfindung gemäß einem ersten Ausführungsbeispiel Verwendung findet,
Fig. 2 ein weiteres Mobilteil, wie es bei der vorliegenden Erfindung gemäß einem weiteren Ausführungsbeispiel Verwendung findet.
Fig. 3 ein Mobilteil in in eine Feststation gemäß der Erfindung eingesetztem Zustand,
Fig. 4 einen inneren Aufbau eines Mobilteils gemäß der vorliegenden Erfindung, und
Fig. 5 eine schematische Darstellung eines erfindungsgemäßen Systems zur Mobilfunkübertragung.

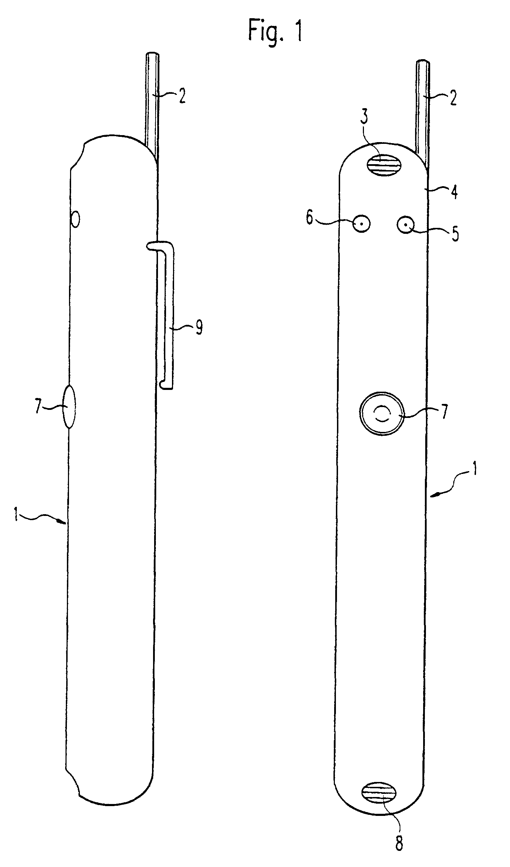

In Fig. 1 ist ein Mobilteil 1 gezeigt, wie es bei der vorliegenden Erfindung Verwendung findet. Das Mobilteil 1 weist dabei eine Antenne 2, ein Gehäuse 4, einen Lautsprecher 3 sowie ein Mikrofon 8 auf. Der Abstand zwischen dem Lautsprecher 3 und dem Mikrofon 8 entspricht im wesentlichen dem Abstand zwischen einem Ohr und dem Mund eines erwachsenen Menschen. Die Länge des Mobilteils 1 ist im wesentlichen durch den Abstand zwischen dem Lautsprecher 3 und dem Mikrofon 8 vorgegeben. Die Breite des in Fig. 1 dargestellten Mobilteils 1 betragt beispielsweise 2 bis 3 cm. Diese geringe Breite des Mobilteils 1 wird wie ersichtlich dadurch ermöglicht, daß sich auf der Oberfläche des Mobilteils 1, d. h. auf dem Gehäuse 4 des Mobilteils 1, kein herkömmliches Tastenfeld bestehend aus mehreren Tasten jeweils zur Eingabe einer Ziffer vorgesehen ist. Das Mobilteil 1 gemäß dem in Fig. 1 dargestellten Ausführungsbeispiel weist nur eine Taste, nämlich eine Zentraltaste 7, auf. Wenn diese Zentraltaste 7 einmal gedrückt wird, wird das Mobilteil 1 eingeschaltet. Unmittelbar nach der Inbetriebnahme erfolgt nach erfolgreicher Berechtigungsprüfung der eingesetzten SIM-Karte sofort die Suche nach einem erreichbaren Mobilfunknetz. Das Blinken einer Netzdiode 5 zeigt dabei die Ausführung des Suchvorgangs an. Durch ein konsatntes Leuchten der Netzdiode 5 wird angezeigt, daß eine Netzverbindung erfolgreich gefunden wurde. Nach diesem Suchen und Registrieren in ein Mobilfunknetz ist das Mobilteil 1 dann in einem Zustand, in dem es in gleicher Weise wie ein herkömmliches Mobiltelefon angewählt werden kann. Eine Eingabe eines sogenannten PIN-Codes von Hand muß zum Inbetriebsetzen des Mobilteils 1 nicht erfolgen, da wie ogen ausgeführt automatisch eine interne Prüfung der Berechtigung ausgeführt wird.

Die Netzdiode 5 kann weiterhin die Funktion aufweisen, daß sie durch Änderung ihrer Leuchtfarbe beispielsweise von Grün auf Rot den Zustand anzeigt, daß eine Verbindung aufgebaut ist.

Das Mobilteil 1 weist im übrigen auch einen Lautstärkeregler für den Lautsprecher 3 auf, der indessen nicht dargestellt ist.

In dem eingeschalteten Zustand des Mobilteils 1 können somit Anrufe entgegengenommen werden. Diese Anrufe können akustisch, visuell oder durch Vibration signalisiert werden. Im in Fig. 1 dargestellten Ausführungsbeispiel wird ein Anruf mittels einer Leuchtdiode 5 dargestellt. Diese Gesprächs-Leuchtdiode 5 blinkt bei Anruf und leuchtet während eines Gesprächs kontinuierlich. Durch Drücken der Zentraltaste 7 kann ein laufendes Gespräch wieder beendet werden. Bei Beendigung des Gesprächs erlischt somit die Gesprächs-Leuchtdiode 5.

Im folgenden soll nun erläutert werden, wie von dem Mobilteil 1 aus ausgehende Gespräche geführt werden können. Voraussetzung dafür ist zuerst, daß das Mobilteil 1 eingeschaltet wurde und die Netz-Leuchtdiode 6 leuchtet, also eine Verbindung zu einem Mobilfunknetz besteht. Durch nochmaliges Drücken der Zentraltaste 7 kann dann eine Verbindung zu einem Verbindungsziel aufgebaut werden, wobei das vorbestimmte Verbindungsziel beispielsweise durch den Betreiber des Netzes, den Hersteller des Mobilfunkteils oder den Betreiber des Verbindungsziels fest in dem Mobilteil 1 einprogrammiert ist. "Fest einprogrammiert" bedeutet im Sinne der vorliegenden Beschreibung, daß es durch Zugriff allein auf das Mobilfunkteil 1 nicht möglich ist, das vorbestimmte Verbindungsziel, das der Zentraltaste 7 fest vorprogrammiert zugewiesen ist, zu ändern oder zu löschen. Die Programmierung des der Zentraltaste 7 zugewiesenen Verbindungsziels findet also nicht durch den Benutzer des Mobilteils 1 statt, sondern wird vielmehr vor Verkauf des Mobilteils 1 vom Hersteller einmalig vorgesehen. Als vorbestimmtes Verbindungsziel, das der Zentraltaste 7 vorprogrammiert zugewiesen wird, kommt insbesondere, aber nicht ausschließlich, eine zentrale Vermittlungseinrichtung in Frage. Der genaue Betrieb der zentralen Vermittlungseinrichtung wird weiter unten beschrieben. Durch das zweite Drücken der Zentraltaste 7 wird somit eine direkte Verbindung zu der zentralen Vermittlungseinrichtung aufgebaut, die den Benutzer des Mobilteils 1 dann mit jedem gewünschten weiteren Teilnehmer verbinden kann, wie ebenfalls weiter unten ausgeführt wird.

Das in Fig. 1 dargestellte Ausführungsbeispiel für ein Mobilteil 1 ist somit durch das Weglassen eines Tastenfeldes und das Ersetzen des Tastenfeldes durch eine einzige Wahltaste in Form der Zentraltaste 7 größenmäßig so dimensioniert, daß es beispielsweise mittels eines Clips 9 beliebig getragen werden kann oder mit einer nicht dargestellten Kordel um den Hals gehängt werden kann, so daß beispielsweise ein Monteur mit beiden Händen arbeiten kann und gleichzeitig durch das umgehängte und in Betrieb gesetzte Mobilteil 1 online instruiert werden kann. Dazu kann vorzugsweise ein bekannter Ohrhörer vorgesehen sein, da der Monteur ja während seiner Tätigkeit das Mobilteil 1 nicht an seinem Ohr halten kann.

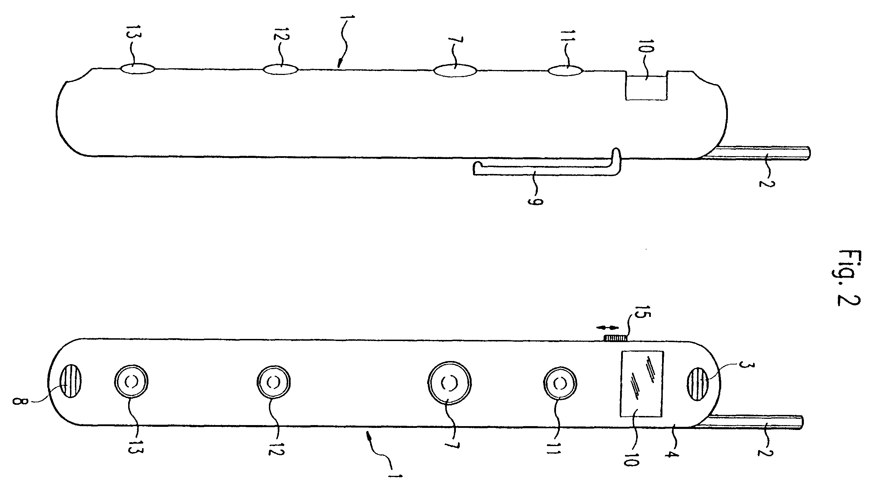

Nunmehr soll eine weitere Ausführungsform eines erfindungsgemäßen Mobilteils 1 bezugnehmend auf Fig. 2 erläutert werden. Das in Fig. 2 dargestellte Mobilteil 1 weist sämtliche Elemente des in Fig. 1 dargestellten Mobilteils 1 auf. Von dem in Fig. 1 dargestellten Mobilteil unterscheidet sich das in Fig. 2 dargestellte Mobilteil 1 im wesentlichen dadurch, daß mehrere Direkt-Verbindungstasten 7, 11, 12, 13 vorgesehen sind. Weiterhin ist bei dem Ausführungsbeispiel von Fig. 2 die Ein-/Aus-Schaltfunktion für das Mobilteil 1 separat zu der Zentraltaste 7, nämlich in Form eines Ein-/Ausschalters 15 vorgesehen. Dieser Ein-/Ausschalter des Mobilteils 1 gemäß Fig. 2 befindet sich seitlich an dem Gehäuse 4 des Mobilteils 1 und kann zum Ein- bzw. Ausschalten des Geräts nach oben bzw, unten verschoben werden. Weiterhin weist das in Fig. 2 dargestellte Mobilteil ein Anzeigefeld 10 auf.

Nun soll die Funktion der weiteren Direkt-Verbindungstasten 11, 12, 13 des Mobilteils 1 von Fig. 2 erläutert werden. Diese Direkt-Verbindungstasten 11, 12, 13 haben mit der Zentraltaste 7 gemeinsam, daß durch eine einmalige Betätigung von ihnen eine Verbindung zu einem ihnen jeweils zugewiesenen Verbindungsziel aufgebaut werden kann. Beispielsweise kann der Taste 13 ein Notrufziel, d. h. eine Notruforganisation als Verbindungsziel zugewiesen sein. Die Tasten 11 und 12 können als Direkt-Verbindungstasten beispielsweise für häufig erwünschte Verbindungen frei vom Benutzer des Mobilteils 1 belegt werden, wie im folgenden beschrieben werden wird.

Auch wenn es nicht dargestellt ist, so kann das Mobilteil 1 von Fig. 2 auch eine Schnittstelle aufweisen, die den Anschluß an ein bekanntes GSM-Modem ermöglicht.

Die vom Benutzer frei belegbaren Tasten können wie folgt belegt werden. Zuerst stellt der Benutzer durch Betätigung der Zentraltaste 7 eine Verbindung zu der zentralen Vermittlungseinrichtung her. Sobald er eine Verbindung mit der zentralen Vermittlungseinrichtung hat, übermittelt der Benutzer des Mobilteils 1 der zentralen Vermittlungseinrichtung Informationen, nämlich welches Verbindungsziel welcher der frei belegbaren Tasten 11, 12 zugewiesen werden soll. Diese Information kann Sprachinformation sein. Die eigentliche Belegung (Programmierung) der frei belegbaren Tasten 11, 12 erfolgt nun nicht unmittelbar auf dem Mobilteil 1 selbst, sondern beispielsweise über bekannte DTMF-Befehle von der zentralen Vermittlungseinrichtung zu dem Mobilteil 1 über einen Funkübertragungsweg. Die Belegung der frei belegbaren Tasten 11, 12 findet also nicht jeweils lokal an einem Mobilteil 1 statt, sondern erfolgt vielmehr als eine Möglichkeit zentral von der Vermittlungseinrichtung.

Vor der eigentlichen Speicherung der übertragenen Belegung werden die von der zentralen Vermittlungseinrichtung 30 her übertragenen Daten auf dem Display 10 des Mobilteils angezeigt. Die endgültige Abspeicherung der Belegung erfolgt erst danach durch Drücken einer Taste, beispielsweise einer der Wahltasten 7, 11, 12, 13 durch den Benutzer.

Von der zentralen Vermittlungseinrichtung 30 her können also Kurzwahlspeicher, die einzelnen Tasten zugeordnet sind, sowie Speicherplätze eines Telefonbuchs auf der SIM-Karte belegt werden. Weiterhin kann als Antwort auf einen entsprechenden Anruf von dem Mobilteil 1 zu der Zentralvermittlungseinrichtung 30 die zentrale Vermittlungseinrichtung 30 zu dem Mobilteil 1 Informationen übertragen, die den Rufton-Typ oder die Ruftöne festlegen, die bei der Benutzung des Mobilteils 1 erklingen sollen. Weiterhin können andere Konditionierungen des Mobilteils 1, wie beispielsweise Anrufsperre, Rufumleitung, Deaktivierung des Begrüßungstextes und Änderung/Auswahl von Ikonen für die Speicherplätze der Kurzwahlspeicher der Direktwahltasten als Antwort auf einen Anruf von dem Mobilteil 1 zu der zentralen Vermittlungseinrichtung 30 durch eine Übertragung von entsprechenden Informationen von der zentralen Vermittiungseinrichtung 30 zu dem Mobilteil 1 erfolgen.

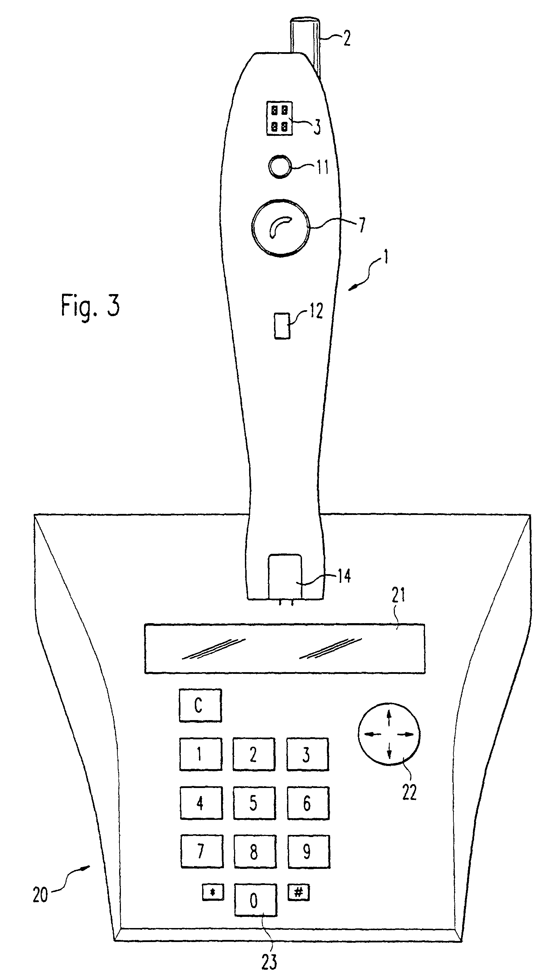

Eine weitere Möglichkeit, wie die Programmierung der frei belegbaren Tasten 11, 12 erfolgen kann, ist in Fig. 3 dargestellt. In Fig. 3 ist das Mobilteil 1 in dem Zustand dargestellt, in dem es in eine Feststation 20 eingesetzt ist. Im eingesetzten Zustand ist es dabei mit der Feststation 20 elektrisch so verbunden, daß ein Akku 14, der die Spannungs-Versorgung des Mobilteils 1 garantiert von der Feststation 20 her aufgeladen wird. Die Feststation 20 dient somit auch als Ladestation für den Akku 14 des Mobilteils 1. Wie in Figur 3 ersichtlich weist die Feststation 20 sämtliche Bedienungselemente auf, wie es bei einem herkömmlichen Telefon üblich ist, nämlich ein komplettes Tasten-Bedienfeld 23 wenigstens 10 Bedientasten sowie eine großformatige LCD-Anzeige 21. Darüber hinaus weist die in Fig. 3 dargestellte Feststation 20 eine Zentraltaste 22 auf, die dieselbe Funktion wie die oben erläuterte Zentraltaste 7 des Mobilteils 1 erfüllt, wenn das Mobilteil 1 in die Feststation 20 eingesetzt ist. Wie bereits erläutert, wird der Akku 14 des Mobilteils 1 in dem in die Feststation 20 eingesetzten Zustand des Mobilteils 1 geladen. Darüber hinaus ermöglicht das Bedienfeld 23 der Feststation 20, die Belegung der frei belegbaren Tasten 11, 12 des Mobilteils 1 auszuführen. Das heißt, es werden Zuweisungsdaten von der Feststation 20 zu dem Mobilteil 1 übertragen, die jeweils Verbindungsziele den einzelnen frei belegbaren Tasten 11, 12 zuweisen. Wie bereits ausgeführt, ist es auch mittels der Feststation 20 nicht möglich, die Zuweisung des Verbindungszieles für die Zentraltaste 7 zu ändern.

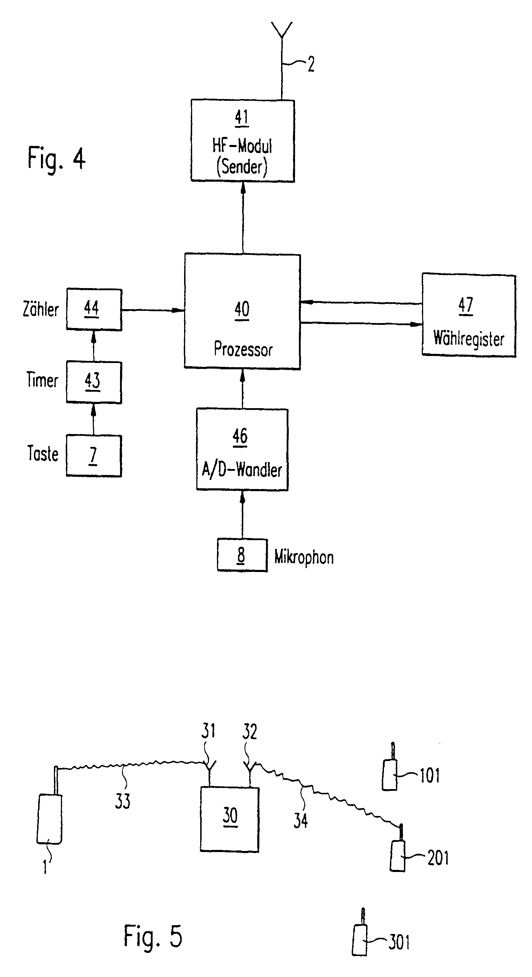

Bezugnehmend auf Fig. 4 soll nunmehr der innere Aufbau eines Mobilteils 1 erläutert werden. Der zentrale Baustein der Elektronik in einem Mobilteil 1 ist wie dargestellt ein Prozessor 40, der beispielsweise ein handelsüblicher Chip für Mobiltelefone sein kann. Dem Prozessor 40 werden dabei Sprachdaten zugeführt, die durch eine Digitalisierung der durch das Mikrofon 8 eingegebenen analogen Sprachsignale durch einen A/D-Wandler 46 bereitgestellt werden. Dem Prozessor 40 werden weiterhin die Informationen von den Wahltasten, nämlich den Direkt-Verbindungstasten des Mobiltells 1 zugeführt. In Fig. 4 ist als Beispiel die Zuführung von Signalen von der Zentraltaste 7 dargestellt. Die Taste 7 ist wie dargestellt mit einem Timer (Zeitgeber) 43 verbunden. Der Timer 43 erfaßt somit, ob und wie lange die Taste 7 gedrückt ist. Ein Zähler 44, der wiederum mit dem Timer 43 verbunden ist, ermittelt die durch den Timer 43 erfaßte Betätigungs-Zeitdauer der Taste 7. Der Inhalt des Zählers 44 wird dann dem Prozessor 40 zugeführt. Mittels des Timers 43 und des Zählers 44 kann der Prozessor 40 somit erfassen, ob eine Taste, im dargestellten Fall die Zentraltaste 7 gedrückt ist und wie lange eine Taste gedrückt wurde. Der Prozessor 40 kann somit eine Schaltzustandsauswertung durchführen. Dies bedeutet, daß der Prozessor 40 beispielsweise erfassen kann, daß die Zentraltaste 7 des Mobilteils 1 gemäß der Ausführungsform von Fig. 1 erstmalig gedrückt wird. Diesen Schaltzustand 1 setzt der Prozessor 40 derart um, daß er die Spannungsversorgung für das Mobilteil 1 einschaltet und gleichzeitig die Registrierung des Mobilteils 1 in dem entsprechenden Mobilfunknetz veranlaßt. Da der Prozessor 40 auch erfaßt, wie lange die Taste 7 beim erstmaligen Betätigen gedrückt wurde, kann er beispielsweise veranlassen, daß bei Überschreiten einer vorbestimmten Zeitdauer der Betätigung der Taste 7 automatisch ein Notruf an eine Notruforganisation als Verbindungsziel abgesendet wird.

Ein nochmaliges Drücken der Zentraltaste 7 erzeugt den Schaltzustand 2. Diesen Schaltzustand 2 wertet der Prozessor 40 dahingehend aus, daß er die Verbindung zu der zentralen Vermittlungseinrichtung herstellt. Der Prozessor 40 wertet somit die Schaltzustände sowie die Zeitdauer der Betätigung der einzelnen Wahltasten des Mobilteils 1 aus.

Mit dem Prozessor 40 ist in bekannter Weise ein HF-Modul als Sende-/Empfangsvorrichtung verbunden, mit dem wiederum die Antenne 2 des Mobilteils verbunden ist.

Bei einem üblichen Mobiltelefon, das eine Adreßbuch-Funktion aufweist, wird normalerweise bei Aktivieren der Adreßbuch-Funktion Adreßbuch-Daten aus einem ersten Wählregister, das beispielsweise auf einer Chipkarte gespeichert sein kann, in ein zweites Wählregister geladen. Gemäß der vorliegenden Erfindung indessen weist die Elektronik eines Mobilteils 1 nur ein Wählregister 47 auf, das die Zuweisungsdaten der Verbindungsziele für die frei belegbaren Tasten 11, 12 (siehe Ausführungsbeispiel von Fig.2) enthält. Bei einer Zuweisung von Verbindungszielen an eine frei belegbare Taste mittels der zentralen Vermittlungseinrichtung oder der Feststation 20 wie oben erläutert, wird somit der Inhalt des Wählregisters 47 allein geändert.

Bezugnehmend auf Fig. 5 soll nunmehr die Funktion unter Betrieb der zentralen Vermittlungseinrichtung näher erläutert werden. In Fig. 5 sind Mobilteile 1, 101, 201, 301 dargestellt, die miteinander insbesondere über eine zentrale Vermittlungseinrichtung 30 kommunizieren können. In Fig. 5 ist der Fall dargestellt, daß das Mobilteil 1 eine Funkverbindung 33 mittels einer Antenne 31 mit der zentralen Vermittlungseinrichtung 30 aufgebaut hat, und die zentrale Vermittlungseinrichtung 30 diesen Anruf mittels einer Antenne 32 über einen weiteren Funkübertragungsweg 34 an ein weiteres Mobilteil 201 weiter vermittelt hat. Die Weitervermittlung erfolgt dabei wie folgt. Beispielsweise bei der erstmaligen Registrierung eines Mobilteiles wird in der zentralen Vermittlungseinrichtung 30 eine Paßwort-Tabelle angelegt. In der Paßwort-Tabelle sind Teilnehmerdaten, wie beispielsweise die Anrufnummer oder die Chipkartennummer (PIN-Nummer) usw. zu jeweils den Teilnehmerdaten zugeordnete Paßwörter abgespeichert. Wenn nun ein Mobilteil 1 eine Verbindung 33 zu der zentralen Vermittlungseinrichtung 30 in der oben beschriebenen Weise beispielsweise über die Zentraltaste 7 hergestellt hat, werden der zentralen Vermittlungseinrichtung 30 automatisch gleichzeitig mit dem Anruf die Teilnehmerdaten beispielsweise in dem sogenannten A-Feld des GSM-Standards übertragen. Die zentrale Vermittlungseinrichtung 30 ist somit durch die Übertragung der Teilnehmerdaten automatisch von dem Mobilteil 1 her sofort informiert, welcher Teilnehmer eine Verbindung zu der zentralen Vermittlungseinrichtung 30 aufgebaut hat. Nach dieser automatischen Übertragung der Teilnehmerdaten von dem Mobilteil 1 zu der zentralen Vermittlungseinrichtung 30 fragt die zentrale Vermittlungseinheit 30 von dem Mobilteil 1 ein Paßwort ab. Dieses als Antwort auf die Abfrage von der zentralen Vermittlungseinrichtung 30 hin von dem Mobilteil 1 her übermittelte Paßwort wird dann in der Paßwort-Tabelle in der zentralen Vermittlungseinrichtung 30 abgeglichen. Dies bedeutet, daß die zentrale Vermittlungseinheit 30 überprüft, ob das übermittelte Paßwort tatsächlich den automatisch erhaltenen Teilnehmerdaten zugeordnet ist. Nur wenn diese Überprüfung der Paßwort-Tabelle positiv ist, d.h. wenn das übermittelte Paßwort und die übermittelten Teilnehmerdaten tatsächlich der Kombination Paßwort/Teilnehmerdaten der Paßwort-Tabelle in der zentralen Vermittlungseinrichtung 30 entsprechen, vermittelt die zentrale Vermittlungseinrichtung 30 den Anruf 33 von dem Mobilteil 1 her zu dem gewünschten Teilnehmer, im dargestellten Fall zu dem Mobilteil 201.

Auch wenn im dargestellten Beispiel die Weitervermittlung eines Gesprächs an ein weiteres Mobilteil erfolgt, so ist doch ersichtlich, daß der Anruf von einem erfindungsgemäßen Mobilteil genauso an einen Festnetz-Anschluß weitervermittelt werden kann.

Diese Sicherheitsfunktion durch die Abfrage des Paßworts ist wichtig, da erfindungsgemäß beim Einschalten des Mobilteils 1 kein PIN-Code eingegeben werden muß und somit diese Möglichkeit einer Diebstahlsicherung bzw. Mißbrauchssicherung entfällt. Nicht autorisierte Personen können somit mit einem erfindungsgemäßen Mobilteil lediglich Gespräche entgegennehmen. Das Führen von ausgehenden Gesprächen ist lediglich zu den Verbindungszielen möglich, die für den Fall der Ausführungsform von Fig. 2 den frei belegbaren Tasten 11, 12 zugewiesen sind. In der Regel sind diese Verbindungsziele, die den frei belegbaren Tasten 11, 12 zugewiesen sind, indessen nur für eine bestimmte Person von Bedeutung, so daß ein mißbräuchlicher Verwender kein Interesse an der Verwendung dieser vorgegebenen Verbindungsziele hat.

Die in einem Mobilteil enthaltene Karte allein hat für den widerrechtlichen Verwender ebenfalls wenig nutzen, da ja nach Einlegen dieser Karte in ein anderes Mobilteil ein Berechtigungs-Prüfvorgang erfolgt, der negativ enden wird.

Die Paßwort-Funktion wird übrigens auch bei der Funktion der Zuweisung der frei belegbaren Tasten 11, 12 bei der Ausführungsform des Mobilteils 1 gemäß Fig. 2 von der zentralen Vermittlungseinrichtung 30 her verwendet. Nach einem Anruf bei der zentralen Vermittlungseinrichtung 30 kann somit eine Tastenbelegung erst nach zutreffender Nennung des Paßworts vorgenommen werden. Der Vermittlungsoperator in der zentralen Vermittlungseinrichtung 30 sendet dann die entsprechenden beispielsweise DTMF-Befehle an das anrufende Mobilteil. Somit kann ein mißbräuchlicher Benutzer die für ihn ungünstigen Verbindungsziele, die beispielsweise bei einem entwendeten Mobilteil 1 den frei belegbaren Tasten 11, 12 vom rechtmäßigen Benutzer zugewiesen wurden, nicht dahingehend abändern, daß er mittels der zentralen Vermittlungseinrichtung für ihn günstigere bzw. häufiger gewünschte Verbindungsziele den frei belegbaren Tasten 11, 12 mittels der zentralen Vermittlungseinrichtung 30 zuweisen läßt.

Um die Vermittlung eines in einem Mobilteil in der zentralen Vermittlungseinrichtung 30 eingehenden Anrufs besonders schnell und einfach zu gestalten, können beispielsweise bei der erstmaligen Registrierung des Mobilteils 1 der Paßwort-Tabelle in der zentralen Vermittlungseinrichtung 30 bevorzugte Verbindungsziele, deren Anzahl vom Betreiber der zentralen Vermittlungseinrichtung 30 begrenzt werden kann, vorgegeben werden. Unmittelbar nach Anruf von einem Mobilteil 1 und der automatischen Übertragung der entsprechenden Teilnehmerdaten ermittelt somit die zentrale Vermittlungseinrichtung 30 ausgehend von den Teilnehmerdaten der entsprechenden Paßwort-Tabelle die bevorzugten Verbindungsziele, so daß eine Vermittlung zu den bevorzugten Verbindungszielen mit weitaus geringerem Aufwand erfolgen kann, als wenn eine Verbindung zu beliebigen anderen Verbindungszielen, die natürlich weiterhin möglich ist, mit im Verhältnis dazu größerem Suchaurwand erfolgen muß.

Gemäß der Erfindung kann also der Tastensatz stark verringert werden und es wird dennoch die vollständige Funktionsfähigkeit des Geräts gewährleistet sind, indem der Zugriff auf gewisse Funktionen des Mobilteils beispielsweise in einen intelligenten Vermittlungsdienst oder eine Feststation ausgelagert werden und somit nicht unmittelbar auf dem Mobilteil erfolgt.

### Bezugszeichenliste:

Mobilteil:
   - 1:: Mobilteil
   - 2:: Antenne
   - 3:: Lautsprecher
   - 4:: Gehäuse
   - 5:: Leuchtdiode
   - 6:: Leuchtdiode
   - 7:: Zentraltaste
   - 8:: Mikrophon
   - 9:: Clip
   - 10:: Anzeigefeld
   - 11:: Direktverbindungs-Taste
   - 12:: Direkverbindungs-Taste
   - 13:: Notruftaste
   - 14:: Akku
Ladestation:
   - 20:: Feststation (Ladestation)
   - 21:: Anzeigefeld
   - 22:: Zentraltaste (Feststation)
   - 23:: Tastenfeld

   - 30:: Zentrale Vermittlungsvorrichtung
   - 31:: Antenne
   - 32:: Antenne
   - 33:: Übertragungsweg
   - 34:: Übertragungsweg
Innerer Aufbau eines Mobilteils:
   - 40:: Prozessor
   - 41:: HF-Modul (Sender)
   - 43:: Timer
   - 44:: Zähler
   - 46:: A/D-Wandler
   - 47:: Wählregister

   - 101:: weiteres Mobilteil
   - 201:: weiteres Mobilteil
   - 302:: weiteres Mobilteil

## Patentansprüche

1. Verfahren zur Konfigurierung eines Mobilteils (1) für eine Mobilfunk-Übertragung, wobei das Mobilteil (1) Direktwahltasten aufweist, aufweisend den folgenden Schritt:
- Übertragung von Information von dem Mobilteil (1) zu einer zentralen Vermittlungsstelle (30), wobei die Information eine gewünschte Belegung von Direktwahltasten (7, 11, 12, 13) des Mobilteils (1) wiedergibt, **gekennzeichnet durch** den folgenden Schritt:
- Zuweisung eines Verbindungsziels abhängig von der übertragenen Information an die Direktwahltasten **durch** eine drahtlose Datenübermittlung von der zentralen Vermittlungsstelle (30) zu dem Mobilteil (1).

2. Verfahren nach Anspruch 1,
**dadurch gekennzeichnet,**
**daß** Sprachinformation (1) zu der zentralen Vermittlungsstelle (30) zur Belegung der Direktwahltasten übertragen wird.

3. Verfahren nach Anspruch 1,
**dadurch gekennzeichnet,**
**daß** die Zuweisung eines vorbestimmten Verbindungsziels an die Direktwahltasten (7, 11, 12, 13) durch unmittelbaren Zugriff auf das Mobilteil (1) nicht geändert werden kann.

4. Verfahren nach einem der vorhergehenden Ansprüche,
**dadurch gekennzeichnet,**
**daß** einer Zentraltaste (7) die Vermittlungseinrichtung (30) als Verbindungsziel zugewiesen wird.

5. Verfahren nach einem der vorhergehenden Ansprüche,
**dadurch gekennzeichnet,**
**daß** das Mobilteil (1) durch die Betätigung der Zentraltaste (7) eingeschalten wird, durch eine weitere Betätigung der Zentraltaste (7) die Verbindung (33) zu der zentralen Vermittlungseinrichtung (30) aufgebaut wird, durch eine nochmals weitere Betätigung der Zentraltaste (7) die Verbindung (33) abgebrochen wird und durch eine nochmals weitere Betätigung der Zentraltaste (7) das Mobilteil (1) ausgeschaltet wird.

6. Verfahren nach einem der vorhergehenden Ansprüche,
**dadurch gekennzeichnet,**
**daß** einer (13) der Direktwahltasten (7, 11, 12, 13) ein Notruf-Verbindungsziel zugewiesen wird.

7. Mobilfunk-Übertragungssystemmit einem Mobilteil, das Direktverbindungstasten (7, 11, 12, 13) aufweist, und einer zentralen Vermittlungsstelle (30), wobei
- die zentrale Vermittlungsstelle (30) eine Paßwort-Tabelle aufweist, die Teilnehmerdaten mit jeweils zugeordnetem Paßwort enthält,
- eine Einrichtung vorgesehen ist, durch die nach Aufbau der Verbindung (33) von dem Mobilteil (1) zu der zentralen Vermittlungsstelle (30) Teilnehmerdaten und ein Paßwort zu der zentralen Vermittlungsstelle (30) übermittelbar sind,
- in der zentralen Vermittlungsstelle (30) eine Einrichtung zum Abgleich der übermittelten Teilnehmerdaten bzw. des übermittelten Paßworts mit der Paßwort-Tabelle vorgesehen ist,
**dadurch gekennzeichnet,**
**daß** in der zentralen Vermittlungsstelle (30) eine Einrichtung zur Zuordnung eines Verbindungsziels zu jeweils einer der Direktverbindungs-Tasten (11, 12, 13) durch eine drahtlose Datenübermittlung von der zentralen Vermittlungsstelle (30) zu dem Mobilteil (1) vorgesehen ist, wobei diese Zuordnung als Antwort auf eine entsprechende Übertragung von Informationen von dem Mobilteil (1) zu der zentralen Vermittlungseinrichtung (30) erfolgt.

8. Mobilfunk-Übertragungssystem nach Anspruch 7,
**dadurch gekennzeichnet,**
**daß** eine Feststation (20) vorgesehen ist, in die das Mobilteil (20) einsetzbar ist, um eine Zuordnung jeweils eines Verbindungszieles zu einer der Direktverbindungs-Tasten (11, 12, 13) mit Ausnahme der Zentraltaste (7) durch eine Datenübertragung von der Feststation (20) zu dem Mobilteil (1) auszuführen.

9. Mobilfunk-Übertragungssystem nach Anspruch 8,
**dadurch gekennzeichnet,**
**daß** die Feststation als Ladestation (2) ausgeführt ist und das Mobilteil (1) einen Akku (14) aufweist, der im in der Feststation (20) eingesetzten Zustand des Mobilteils (1) aufladbar ist.

10. Mobilfunk-Übertragungssystem nach Anspruch 7,
**dadurch gekennzeichnet,**
**daß** in der Paßwort-Tabelle der zentralen Vermittlungsstelle (30) eine Liste an möglichen Verbindungszielen vorgesehen ist, die jeweils einem Paßwort und/oder jeweils bestimmten Teilnehmerdaten zugeordnet ist.

## Claims

1. Process for configuring a mobile unit (1) for a mobile radio transmission, wherein the mobile unit (1) has direct dialling key, said process having the following steps:
- transmission of information from the mobile unit (1) to a central switching centre (30), wherein the information represents a desired assignment of direct dialling keys (7, 11, 12, 13) of the mobile unit (1), and
- assignment of a connection destination to the direct dialling keys as a function of the transmitted information by means of a wireless data transfer from the central switching centre (30) to the mobile unit (1).

2. Process according to Claim 1,
**characterised in that,**
voice information (1) is transmitted to the central switching centre (30) for the assignment of the direct dialling keys.

3. Process according to Claim 1,
**characterised in that,**
the assignment of a predefined connection destination to the direct dialling keys (7, 11, 12, 13) cannot be modified by direct access to the mobile unit (1).

4. Process according to one of the preceding Claims,
**characterised in that,**
a central key (7) is assigned the switching device (30) as connection destination.

5. Process according to one of the preceding Claims,
**characterised in that,**
the mobile unit (1) is switched on by activating the central key (7), the connection (33) to the central switching device (30) is set up by means of a further activation of the central key (7), the connection (33) is released by means of yet another activation of the central key (7), and the mobile unit (1) is switched off by a further activation of the central key (7).

6. Process according to one of the preceding Claims,
**characterised in that,**
one (13) of the direct dialling keys (7, 11, 12, 13) is assigned an emergency-call connection destination.

7. Mobile radio transmission system having a mobile unit, which has direct dialling keys (7, 11, 12, 13), and a central switching centre (30), wherein
- the central switching centre (30) has a password table which contains subscriber data with a respectively assigned password,
- a device is provided by means of which, after the set-up of the connection (33) from the mobile unit (1) to the central switching centre (30), subscriber data and a password can be transferred to the central switching centre (30),
- a device for comparing the transferred subscriber data of the transferred password with the password table, is provided in the central switching centre (30),
**characterised in that,**
a device for assigning a connection destination to, in each case, one of the direct connection keys (11, 12, 13) by means of a wireless data transfer from the central switching centre (30) to the mobile unit (1) is provided in the central switching centre (30), wherein this assignment takes place in response to a corresponding transmission of information from the mobile unit (1) to the central switching device (30).

8. Mobile radio transmission system according to Claim 7,
**characterised in that,**
a base station (20) is provided, into which the mobile unit (1) can be inserted in order to carry out an assignment of, in each case, one connection destination to one of the direct connection keys (11, 12, 13), with the exception of the central key (7), by means of a data transmission from the base station (20) to the mobile unit (1).

9. Mobile radio transmission system according to Claim 8,
**characterised in that,**
the base station is designed as a charger station (20), and the mobile unit (1) has a storage battery (14) which can be charged when the mobile unit (1) is in the state in which it is inserted in the base station (20).

10. Mobile radio transmission system according to Claim 7,
**characterised in that,**
a list of possible connection destinations, each of which is assigned to a password and/or respective subscriber data, is provided in the password table of the central switching centre (30).

## Revendications

1. Procédé pour configurer une partie mobile (1) destinée à la radiotéléphonie, la partie mobile (1) comprenant un clavier de sélection directe, lequel procédé comporte l'étape suivante consistant à :
- transférer une information de la partie mobile (1) à une station centrale (30), l'information reproduisant une réservation souhaitée de touches de sélection directe (7, 11, 12, 13) de la partie mobile (1), **caractérisé par** l'étape suivante consistant à :
- affecter aux touches de sélection directe, en fonction de l'information transmise, une destination de communication via une transmission de données sans fil de la station centrale (30) à la partie mobile (1).

2. Procédé selon la revendication 1, **caractérisé en ce que** l'information vocale (1) est transmise à la station centrale (30) en vue de la réservation des touches de sélection directe.

3. Procédé selon la revendication 1, **caractérisé en ce que** l'affectation d'une destination de communication prédéterminée aux touches de sélection directe (7, 11, 12, 13) ne peut pas être modifiée en accédant directement à la partie mobile (1).

4. Procédé selon l'une des revendications précédentes, **caractérisé en ce que** la station centrale est affectée à une touche centrale (7) en tant que destination de communication.

5. Procédé selon l'une des revendications précédentes, **caractérisé en ce que** la partie mobile (1) est mise en route en actionnant la touche centrale (7), **en ce que** la communication (33) avec la station centrale est établie en actionnant encore une fois la touche centrale (7), **en ce que** la communication (33) est interrompue en actionnant encore une fois la touche centrale (7), et **en ce que** la partie mobile (1) est éteinte en actionnant encore une fois la touche centrale (7).

6. Procédé selon l'une des revendications précédentes, **caractérisé en ce qu'**une destination de communication urgente est affectée à une touche (13) des touches de sélection directe (7, 11, 12, 13).

7. Système de radiotéléphonie mobile comprenant une partie mobile, qui comporte des touches de communication directe (7, 11, 12, 13), et une station centrale (30), dans lequel :
- la station centrale (30) comporte un tableau de mots de passe qui contient les données relatives aux correspondants à chacune desquelles est associée un mot de passe,
- il est prévu un dispositif permettant de transmettre les données relatives aux correspondants et un mot de passe à la station centrale après avoir établi la communication (33) de la partie mobile (1) à la station centrale (30),
- il est prévu dans la station centrale (30) un dispositif destiné à comparer les données transmises relatives aux correspondants ou le mot de passe transmis avec le tableau de mots de passe, **caractérisé en ce que**
il est prévu dans la station centrale (30) un dispositif destiné à affecter une destination de communication à chacune des touches de communication directe (11, 12, 13) via une transmission de données sans fil de la station centrale (30) à la partie mobile (1), cette affectation étant effectuée en réponse à une transmission correspondante d'informations de la partie mobile (1) à la station centrale (30).

8. Système de radiotéléphonie mobile selon la revendication 7, **caractérisé en ce qu'**il est prévu une station fixe (20) dans laquelle la partie mobile peut être insérée pour affecter une destination de communication à une des touches de communication directe (11, 12, 13) à l'exception de la touche centrale (7) via une transmission de données de la station fixe (20) à la partie mobile (1).

9. Système de radiotéléphonie selon la revendication 8, **caractérisé en ce que** la station fixe est conformée en station de chargement (2) et **en ce que** la partie mobile comporte une batterie (14) qui est rechargeable lorsque la partie mobile (1) est insérée dans la station fixe (20).

10. Système de radiotéléphonie selon la revendication 7, **caractérisé en ce qu'**il est prévu une liste de destinations de communication possibles qui est associée à chaque fois à un mot de passe et/ou à des données déterminées relatives aux correspondants.
